(19) Europäisches Patentamt
European Patent Office
Office européen des brevets

(11) **EP 3 983 837 B1**

(12) **FASCICULE DE BREVET EUROPEEN**

(45) Date de publication et mention de la délivrance du brevet:
**28.08.2024 Bulletin 2024/35**

(21) Numéro de dépôt: **20747066.7**

(22) Date de dépôt: **02.07.2020**

(51) Classification Internationale des Brevets (IPC):
**G02B 5/32** *(2006.01)*   **G02B 27/42** *(2006.01)*

(52) Classification Coopérative des Brevets (CPC):
**G02B 5/32;** G02B 3/0056; G02B 27/4205;
G03H 2001/2231; G03H 2001/262

(86) Numéro de dépôt international:
**PCT/FR2020/051160**

(87) Numéro de publication internationale:
**WO 2021/005287 (14.01.2021 Gazette 2021/02)**

(54) **COMPOSANT OPTIQUE MATRICIEL POUR FOCALISER SUR UNE SÉRIE DE POINTS UN FAISCEAU LUMINEUX INCIDENT**

OPTISCHE MATRIXARRAYKOMPONENTE ZUM FOKUSSIEREN EINES EINFALLENDEN LICHTSTRAHLS AUF EINE REIHE VON PUNKTEN

MATRIX-ARRAY OPTICAL COMPONENT FOR FOCUSING AN INCIDENT LIGHT BEAM ON A SERIES OF POINTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.07.2019 FR 1907551**

(43) Date de publication de la demande:
**20.04.2022 Bulletin 2022/16**

(73) Titulaire: **Commissariat à l'Énergie Atomique et aux Énergies Alternatives 75015 Paris (FR)**

(72) Inventeur: **MARTINEZ, Christophe 38054 Grenoble Cedex 9 (FR)**

(74) Mandataire: **Brevalex 56, Boulevard de l'Embouchure B.P. 27519 31075 Toulouse Cedex 2 (FR)**

(56) Documents cités:
**EP-A1- 1 241 537       CN-A- 104 199 196
US-A- 5 680 231        US-A1- 2004 240 013
US-A1- 2019 041 565**

**Description**

**DOMAINE TECHNIQUE**

L'invention concerne le domaine des composants optiques réalisant la répétition de fonctions optiques identiques ou différentes selon un maillage couvrant une surface. Elle concerne plus particulièrement un composant optique matriciel, configuré pour focaliser sur une pluralité de points un faisceau lumineux incident.

**ÉTAT DE LA TECHNIQUE ANTÉRIEURE**

On connaît dans l'art antérieur des matrices de microlentilles, permettant notamment de focaliser sur une série de points un faisceau lumineux à incidence normale sur ladite matrice. Les microlentilles sont des lentilles réfractives, disposées selon une grille de répartition de pas généralement inférieur ou égal au millimètre. Un inconvénient de ces matrices réside dans leur topologie de surface, avec une succession de surfaces courbes qui complique des étapes de fabrication et de nettoyage.

On peut citer US 5 680 231 A comme exemple de composant optique matriciel de l'art antérieur.

Afin de remédier à cet inconvénient, on peut réaliser un composant optique matriciel dans lequel le phénomène optique mis en oeuvre n'est pas la réfraction de la lumière mais la diffraction. Un tel composant est constitué d'une série d'éléments de focalisation, formés chacun par une alternance de régions opaques et transparentes réalisant ensemble un motif concentrique. Un inconvénient de cette solution est cependant son faible rendement de focalisation, lié à l'opacité d'une part importante de la surface du composant optique. Le rendement de focalisation désigne le rapport entre la quantité de lumière incidente sur ledit composant optique et la quantité de lumière focalisée par ce dernier. Ce rendement peut être augmenté avec une variante dans laquelle l'alternance de régions opaques et transparentes est remplacée par une alternance de régions d'épaisseur nulle et d'épaisseur non nulle (zone plate). Néanmoins, même dans une telle variante le rendement de focalisation ne dépasse pas 40%.

Un objectif de la présente invention est de proposer un composant optique matriciel configuré pour focaliser sur une pluralité de points un faisceau lumineux incident, et qui ne présente pas les inconvénients de l'art antérieur.

En particulier, un but de la présente invention est de proposer un tel composant optique matriciel, qui présente à la fois une topologie de surface sans surface courbe, et un fort rendement de focalisation, supérieur ou égal à 50%.

Un autre but de la présente invention est de proposer un tel composant optique matriciel, pouvant être configuré pour focaliser dans l'axe un faisceau lumineux arrivant sur lui à incidence normale.

**PRÉSENTATION DE L'INVENTION**

Cet objectif est atteint avec un composant optique matriciel, comportant une pluralité de cellules individuelles, ou pixels, et configuré pour focaliser en une pluralité de points un faisceau lumineux incident, et qui comprend :

- un support ;
- une matrice de réflecteurs ; et
- au moins une matrice de lentilles holographiques, dans laquelle chaque lentille holographique est formée par au moins un hologramme en réflexion ;

  avec le support disposé entre la matrice de réflecteurs et l'au moins une matrice de lentilles holographiques, et avec chaque cellule individuelle du composant optique matriciel qui comporte un réflecteur de la matrice de réflecteurs et une lentille holographique respective de chacune parmi l'au moins une matrice de lentilles holographiques, avec le réflecteur et la lentille holographique disposés en vis-à-vis de part et d'autre du support et avec des faces réfléchissantes respectives dudit réflecteur et de ladite lentille holographique situées face à face.

Selon l'invention, chaque lentille holographique de l'au moins une matrice de lentilles holographiques est munie d'une ouverture traversante respective. Ladite ouverture traversante est optiquement transparente à au moins une longueur d'onde de focalisation de la lentille holographique. Elle peut être remplie par un matériau optiquement transparent à au moins une longueur d'onde de focalisation de la lentille holographique, ou laissée libre. Ladite ouverture traversante permet le passage de la lumière au niveau de chacune des cellules individuelles du composant optique matriciel. L'au moins une ouverture traversante est entièrement entourée par la lentille holographique.

Dans le composant optique matriciel selon l'invention, chaque cellule individuelle comporte une lentille holographique, c'est-à-dire un élément de focalisation qui ne présente pas de topologie de surface avec des surfaces courbes. Une lentille holographique est un composant optique bien connu de l'homme du métier, formé par au moins un hologramme, ou figure d'interférence, enregistré dans un support d'écriture photosensible. L'hologramme est réalisé en faisant interférer, dans le support d'écriture photosensible, un faisceau lumineux de référence et un faisceau lumineux objet, le faisceau lumineux objet ayant préalablement traversé une optique réfractive dont on souhaite reproduire la fonction optique. En utilisation, lorsque l'hologramme est illuminé à l'aide d'un faisceau lumineux semblable au faisceau lumineux de référence, il renvoie en réponse un faisceau lumineux semblable au faisceau lumineux objet. Une lentille holographique est configurée pour fonctionner à une longueur d'onde prédéterminée, nommée longueur d'onde de focalisation, correspondant à la longueur d'onde des faisceaux lumineux objet et de référence.

Selon l'invention, chaque lentille holographique est formée par au moins un hologramme en réflexion. Il s'agit du type d'hologramme réalisé lorsque le faisceau lumineux de référence et le faisceau lumineux objet sont incidents sur deux faces opposées du support d'écriture photosensible. En utilisation, l'hologramme en réflexion est illuminé par un faisceau lumineux arrivant sur l'une première de ses faces, et renvoie en réponse un faisceau lumineux émergeant par cette même face. La lumière arrivant et émergeant de l'hologramme en réflexion d'un même côté de celui-ci, il est nécessaire, pour des raisons pratiques, que les faisceaux lumineux arrivant et émergeant dudit hologramme soient inclinés l'un relativement à l'autre. L'hologramme en réflexion, considéré seul, ne permet donc pas de réaliser une focalisation dans l'axe d'un faisceau lumineux arrivant sur lui à incidence normale. Or, il est avantageux que le composant optique selon l'invention puisse être configuré pour focaliser dans l'axe d'un faisceau lumineux arrivant sur lui à incidence normale. Pour cela, chaque cellule individuelle dudit composant comporte en outre un réflecteur, avec une face réfléchissante du réflecteur disposée en vis-à-vis de la face réfléchissante de l'au moins un hologramme en réflexion. La face réfléchissante d'un hologramme en réflexion désigne la face par laquelle il reçoit puis renvoie la lumière.

Dans chaque cellule individuelle, l'au moins un hologramme en réflexion est configuré pour recevoir un faisceau lumineux collimaté, et pour concentrer ce faisceau autour d'un point de focalisation dit virtuel, situé du côté du réflecteur opposé à l'hologramme. En chemin, la lumière renvoyée par l'hologramme atteint le réflecteur sur lequel elle est réfléchie, de manière à revenir vers l'hologramme. Elle est finalement focalisée en un point de focalisation situé sous le réflecteur (du même côté du réflecteur que l'hologramme). L'au moins un hologramme en réflexion est muni d'une ouverture traversante, pour laisser passer la lumière. La lumière peut ainsi être focalisée en un point de focalisation à l'extérieur de la cellule individuelle. En variante, la lumière est focalisée à l'intérieur de la cellule individuelle et le point de focalisation peut ainsi être observé ou imagé depuis l'extérieur de ladite cellule individuelle.

Le composant optique matriciel selon l'invention forme ainsi une matrice de lentilles holographiques dites repliées. Cette configuration est proche de ce qui peut exister dans le domaine des télescopes, mais elle est mise en oeuvre dans un domaine tout autre. Elle permet notamment que chaque cellule individuelle puisse être configurée pour réaliser une focalisation dans l'axe d'un faisceau lumineux arrivant sur lui à incidence normale. L'arrivée à incidence normale sur une cellule individuelle signifie que les rayons lumineux arrivant sur la cellule individuelle sont tous orientés selon un axe orthogonal audit plan de la cellule individuelle. Le plan de chaque cellule individuelle s'étend ici parallèle à la matrice de réflecteurs, ainsi qu'à la matrice de lentilles holographiques et aux faces supérieure et inférieure du support. La focalisation dans l'axe signifie que la cellule individuelle recevant les rayons lumineux arrivant sur elle à incidence normale focalise ces rayons sur un point de focalisation situé le long de l'axe d'incidence, où l'axe d'incidence est centré sur ladite cellule individuelle et orienté selon la normale à ladite cellule individuelle.

La matrice de réflecteurs, tout comme le support, n'amènent pas la présence de surfaces courbes sur une face externe du composant optique matriciel selon l'invention. Ce composant présente donc une topologie de surface sans surface courbe. Il forme même un composant planaire, si l'on néglige l'épaisseur des réflecteurs.

Les lentilles holographiques peuvent atteindre un rendement de focalisation proche de 100%. Les éléments supplémentaires tels que les réflecteurs et le support n'entraînent pas de réduction notable de ce rendement. Le rendement de focalisation du composant optique matriciel selon l'invention n'est alors limité que par un taux de recouvrement des cellules individuelles par les réflecteurs. On peut montrer que le rendement de focalisation du composant optique matriciel selon l'invention peut donc être supérieur ou égal à 50%, pouvant aller jusqu'à au moins 75%.

Un autre avantage du composant optique matriciel selon l'invention est sa faible épaisseur, pouvant être inférieure ou égale au millimètre et même inférieure ou égale à 200 $\mu$m. Cette épaisseur réduite est liée notamment au repliement de faisceau mis en oeuvre dans ledit composant.

De manière avantageuse, l'une ou moins, ou chacune des cellules individuelles du composant optique matriciel selon l'invention est configurée pour focaliser dans l'axe d'incidence un faisceau lumineux arrivant sur elle. En d'autres termes, le point de focalisation est situé le long de l'axe d'incidence du faisceau lumineux arrivant sur la cellule individuelle, avec l'axe d'incidence passant de préférence par le centre géométrique de ladite cellule. De manière avantageuse l'axe d'incidence s'étend selon la normale au plan du composant optique matriciel.

Dans l'une au moins, ou dans toutes les cellules individuelles du composant optique matriciel, l'ouverture traversante dans la lentille holographique respective de chacune parmi l'au moins une matrice de lentilles holographiques peut être centrée sur la cellule individuelle.

Dans l'une au moins, ou dans toutes les cellules individuelles du composant optique matriciel, l'ouverture traversante s'étend avantageusement selon une surface inscrite à l'intérieur d'une projection du réflecteur dans le plan de l'au moins une matrice de lentilles holographiques (notamment une projection orthogonale dans ce plan).

Dans l'une au moins, ou dans toutes les cellules individuelles du composant optique matriciel, le réflecteur peut être formé par un miroir dichroïque, optiquement réfléchissant à au moins une longueur d'onde de focalisation par chaque lentille holographique respective de la même cellule individuelle.

En complément ou en variante, dans l'une au moins, ou dans toutes les cellules individuelles du composant optique matriciel, le réflecteur peut être formé par au moins un hologramme en réflexion (optiquement réfléchissant à au moins une longueur d'onde de focalisation par chaque lentille holographique respective de la même cellule individuelle). Ledit réflecteur peut être apte à réfléchir la lumière selon un angle de réflexion distinct de l'angle d'incidence, en valeur absolue.

Dans l'une au moins, ou dans toutes les cellules individuelles du composant optique matriciel, la lentille holographique respective de chacune parmi l'au moins une matrice de lentilles holographiques est formée d'une pluralité d'hologrammes élémentaires configurés chacun pour dévier la lumière d'un angle prédéterminé.

D'autres caractéristiques avantageuses du composant optique matriciel selon l'invention sont mentionnées dans les revendications.

L'invention couvre également un système optique tel que mentionné dans le jeu de revendications.

L'invention couvre aussi un composant optique de réplication tel que mentionné dans le jeu de revendications.

L'invention couvre en outre un procédé de fabrication tel que mentionné dans le jeu de revendications.

L'invention couvre également un second composant optique de réplication tel que mentionné dans le jeu de revendications.

## BRÈVE DESCRIPTION DES FIGURES

La présente invention sera mieux comprise à la lecture de la description d'exemples de réalisation donnés à titre purement indicatif et nullement limitatif, en faisant référence aux dessins annexés sur lesquels :

[Fig. 1A] illustre de façon schématique, et selon une vue en transparence et en perspective, un premier mode de réalisation d'un composant optique matriciel selon l'invention ;

[Fig. 1B] illustre de façon schématique, et selon une vue en coupe, le fonctionnement du composant optique matriciel de la figure 1A ;

[Fig. 2] illustre de façon schématique, et selon une vue en transparence et en perspective, un deuxième mode de réalisation d'un composant optique matriciel selon l'invention ;

[Fig. 3A] illustre de façon schématique, et selon une vue en coupe, le trajet de la lumière dans le composant optique matriciel de la figure 1A ;

[Fig. 3B] illustre de façon schématique, et selon une vue en coupe, des rayons extrêmes qui définissent le trajet de la lumière dans le composant optique matriciel de la figure 1A ;

[Fig. 3C] illustre la déviation angulaire apportée par la lentille holographique dans le composant optique matriciel de la figure 1A, en fonction d'une position sur ladite lentille ;

[Fig. 4] illustre de façon schématique, et selon une vue en coupe, une cellule individuelle d'un troisième mode de réalisation d'un composant optique matriciel selon l'invention ;

[Fig. 5A] et [Fig. 5B] illustrent de façon schématique, respectivement selon une vue en coupe et selon une vue de dessus, un système comportant un composant optique matriciel selon l'invention ;

[Fig. 6] illustre de façon schématique un premier exemple de procédé de fabrication d'un composant optique matriciel selon l'invention ;

[Fig. 7A], [Fig. 7B], [Fig. 7C], [Fig. 7D], [Fig. 7E], illustrent de façon schématique un deuxième exemple de procédé de fabrication d'un composant optique matriciel selon l'invention ; et

[Fig. 8] illustre de façon schématique, et selon une vue en coupe, un quatrième mode de réalisation d'un composant optique matriciel selon l'invention.

## DESCRIPTION DE MODES DE RÉALISATION PARTICULIERS

Pour faciliter la lecture, on a représenté sur certaines des figures les axes d'un repère orthonormé (Oxyz).

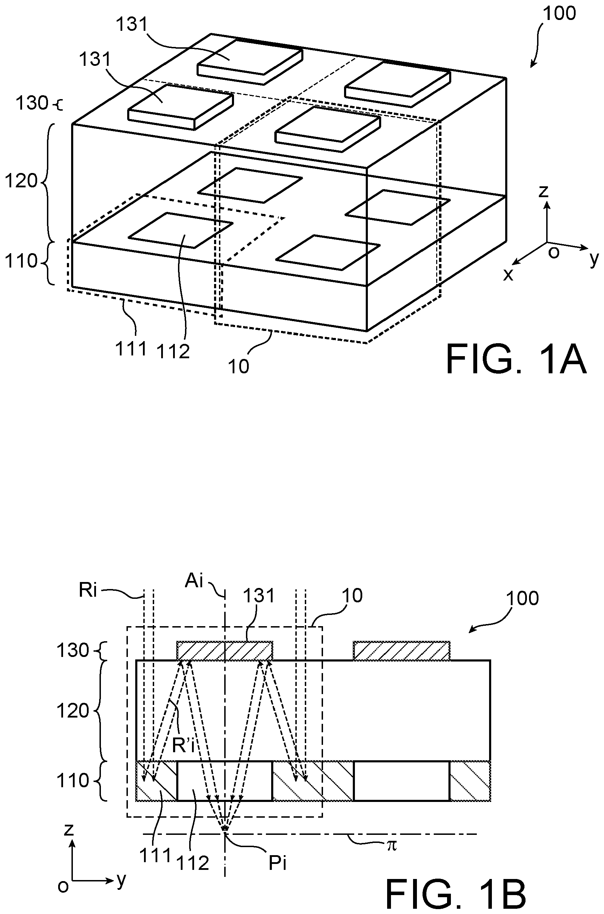

La figure 1A illustre, selon une vue en perspective, un premier mode de réalisation d'un composant optique matriciel 100 selon l'invention. Le composant optique matriciel 100 est un composant monolithique qui comporte, superposés le long de l'axe (Oz), une matrice 110 de lentilles holographiques 111, un support 120, et une matrice 130 de réflecteurs 131. Chacun parmi la matrice 110 de lentilles holographiques, le support 120, et la matrice 130 de réflecteurs s'étend selon un plan respectif parallèle au plan (Oxy).

On définit dans le composant optique matriciel 100 une série de cellules individuelles 10, composées chacune par une lentille holographique 111 de la matrice 110, une portion du support 120, et un réflecteur 131 de la matrice 130. Dans chaque cellule individuelle, la lentille holographique 111 et le réflecteur 131 sont alignés le long de l'axe (Oz), disposés en vis-à-vis l'un de l'autre de part et d'autre de la portion du support 120.

Chacune des lentilles holographiques 111 de la matrice 110 est formée ici par un hologramme en réflexion. Cet hologramme en réflexion est configuré pour recevoir et renvoyer la lumière par une même face, dite face réfléchissante, située du côté de la matrice 130 de réflecteurs. Cet hologramme en réflexion, considéré seul, est configuré pour concentrer, dans une région située en direction de la matrice 130 de réflecteurs, un faisceau de rayons lumineux incident.

Chaque lentille holographique est adaptée à focaliser la lumière à une longueur d'onde déterminée, nommée longueur d'onde de focalisation. La matrice 110 de lentilles holographiques 111 est formée dans une couche pleine en matériau photosensible, ici un polymère photosensible. En l'absence d'hologramme gravé en son sein, ladite couche en matériau photosensible est optiquement transparente à l'au moins une longueur d'onde de focalisation des lentilles holographiques. Elle présente donc à cette longueur d'onde un taux de transmission supérieur ou égal à 80%, et même supérieur ou égal à 95%.

Chaque lentille holographique 111 est ouverte, c'est-à-dire munie d'une ouverture traversante 112 débouchant dans des plans parallèles au plan (Oxy). Ici, l'ouverture traversante 112 est centrée sur le centre de la lentille holographique, mais l'homme du métier comprend aisément à la lecture de la description que ce caractère centré n'est pas essentiel pour résoudre le problème technique à l'origine de l'invention. L'ouverture traversante 112 laisse passer la lumière à la longueur d'onde de focalisation de la lentille holographique. Ici, les ouvertures traversantes 112 sont remplies chacune par le matériau de la couche pleine en matériau photosensible.

Les lentilles holographiques 111 sont réparties ici selon une grille de répartition à maillage carré. Ici, la forme des lentilles holographiques 111 est adaptée pour permettre qu'elles soient agencées adjacentes deux à deux, sans espace libre entre deux lentilles holographiques 111 voisines. Ici, chaque lentille holographique 111 présente donc une forme de premier parallélépipède rectangle à section carrée, muni d'une ouverture traversante 112 telle que mentionnée ci-avant. Ici, l'ouverture traversante présente une forme de second parallélépipède rectangle à section carrée, lequel est disposé aligné et concentrique relativement au premier parallélépipède rectangle.

Le support 120 est un composant planaire, c'est-à-dire avec deux faces planes parallèles entre elles et parallèles au plan (Oxy). Il est constitué d'un matériau transparent à l'au moins une longueur d'onde de focalisation par les lentilles holographiques 111, avec un taux de transmission à cette longueur d'onde supérieur ou égal à 80%, et même supérieur ou égal à 95%. Il peut être constitué d'une lame de verre ou de plastique, par exemple du PET.

Chacun des réflecteurs 131 de la matrice 130 de réflecteurs est formé ici par un élément métallique, optiquement réfléchissant à l'au moins une longueur d'onde de focalisation par les lentilles holographiques 111, avec un taux de réflexion à cette longueur d'onde supérieur ou égal à 80%, et même supérieur ou égal à 95%. Chacun des réflecteurs 131 est optiquement réfléchissant, notamment au niveau d'une de ses faces, dite face réfléchissante, située du côté de la matrice 110 de lentilles holographiques 111. Ici, chacun des réflecteurs 131 met en oeuvre une réflexion dite spéculaire, dans laquelle un rayon lumineux arrivant sur le réflecteur 131 en étant incliné d'un angle $\alpha$ relativement à la normale au plan du réflecteur est renvoyé dans une direction inclinée d'un angle $-\alpha$ relativement à ladite normale.

Ici, les réflecteurs 131 sont formés par des éléments distincts, espacés les uns des autres. Ici, les réflecteurs 131 sont formés chacun d'une fine lamelle de surface principale carrée. Ils sont répartis selon une même grille de répartition que les lentilles holographiques 111. A chaque réflecteur 131 correspond une lentille holographique 111, ces deux éléments étant alignés ensemble le long d'un axe parallèle à l'axe (Oz).

Dans chaque cellule individuelle 10, le réflecteur 131 ne recouvre qu'une partie de la surface supérieure de la cellule individuelle. La forme du réflecteur 131 est adaptée pour permettre à la lumière incidente d'atteindre la matrice 110 de lentilles holographiques en se propageant autour des réflecteurs 131 et dans le support 120.

De manière avantageuse, et comme représenté en figure 1A, dans chaque cellule individuelle 10 l'ouverture traversante 112 dans la lentille holographique 111 est inscrite à l'intérieur d'une projection du réflecteur 131 dans le plan de la matrice 110 de lentilles holographiques, de préférence une projection orthogonale. Ladite ouverture traversante 112 peut s'étendre exactement selon l'étendue de ladite projection orthogonale, ou selon une étendue moindre (par exemple pour absorber une déviation angulaire du faisceau lumineux incident, un désalignement des faces réfléchissantes respectives du réflecteur et de la lentille holographique situées, etc).

La face supérieure du composant optique matriciel 100 est formée par la face supérieure de la matrice 130 de réflecteurs 131, du côté opposé au support 120. Cette face suit la topologie des réflecteurs 131, constitués de lamelles disposées sur un support 120 plan. Cette face est donc sensiblement plane, et sans surface courbe.

La figure 1B illustre de façon schématique, et selon une vue en coupe dans un plan (Oyz), le composant optique matriciel 100.

On a représenté, en figure 1B, un faisceau de rayons lumineux Ri, incident sur une cellule individuelle 10 du composant optique matriciel 100. Les rayons lumineux Ri arrivent sur la cellule individuelle 10 au niveau de la matrice 130 de réflecteurs 131. Ils sont parallèles entre eux, et arrivent ici à incidence normale sur ladite cellule individuelle 10, c'est-à-dire ici orientés selon l'axe (Oz).

Dans la cellule individuelle 10, les rayons lumineux Ri traversent la matrice de réflecteurs 131 au niveau de régions entourant le réflecteur 131, traversent le support 120 et parviennent jusqu'à la lentille holographique 111.

La lentille holographique 111 concentre ces rayons Ri vers une région située en direction de la matrice de réflecteurs 131. Les rayons ainsi renvoyés par la lentille holographique 111, notés R'i, se propagent dans la cellule individuelle 10 jusqu'au réflecteur 131, au niveau duquel ils sont réfléchis en direction de la même lentille holographique 111. Ils arrivent cependant à hauteur de la lentille holographique 111 au niveau de l'ouverture 112 dans cette dernière, de sorte qu'ils traversent la matrice 110 de lentilles holographiques et émergent hors du composant optique matriciel 100. Lesdits rayons émergeant se croisent tous en un même point Pi, du côté de la matrice 110 de lentilles holographiques.

Ici, le point Pi se trouve sur un axe Ai, nommé axe d'incidence, centré sur la cellule individuelle 110 et parallèle aux rayons lumineux Ri arrivant à incidence normale sur la cellule individuelle. En d'autres termes, la cellule individuelle 10 est configurée ici pour réaliser une focalisation dans l'axe des rayons lumineux arrivant sur elle à incidence normale. Cette focalisation dans l'axe est obtenue par un dimensionnement adapté des éléments constituant la cellule individuelle. On décrit dans la suite des exemples de dimensionnement de ces éléments.

De préférence, chacune des cellules individuelles 10 du composant optique matriciel 100 est configurée pour focaliser en un point respectif Pi un faisceau collimaté de rayons lumineux arrivant à incidence normale sur ladite cellule individuelle, et les différents points Pi associés aux différentes cellules individuelles du composant optique matriciel 100 s'étendent tous dans un même plan $\pi$ parallèle au plan (Oxy) (parallèle à des faces supérieure et inférieure du support, à la matrice 110 de lentilles holographiques et à la matrice 130 de réflecteurs). Ce plan $\pi$ s'étend ici à l'extérieur du composant optique matriciel 100, du côté de la matrice 110 de lentilles holographiques. Selon une variante non représentée, le plan $\pi$ s'étend du même côté de la matrice 110 de lentilles holographiques que le support 120, le cas échéant au sein même du support 120.

Selon d'autres variantes, les points Pi associés aux différentes cellules individuelles du composant optique matriciel 100 ne s'étendent pas tous dans un même plan $\pi$ parallèle au plan (Oxy). En d'autres termes, les lentilles holographiques de la matrice de lentilles holographiques ne présentent alors pas toutes la même valeur de focale.

Ici, le composant optique matriciel 100 comporte une unique matrice 110 de lentilles holographiques. Les différentes lentilles holographiques 111 de ladite matrice peuvent présenter toutes une même longueur d'onde de focalisation. En variante, ladite matrice comporte différents types de lentilles holographiques 111 qui diffèrent par leur longueur d'onde de focalisation. Les différents types de lentilles holographiques 111 peuvent être répartis selon une grille de répartition régulière, constituée de macro-pixels qui comportent chacun au moins une lentille holographique de chaque type. Les différents types de lentilles holographiques sont par exemple associés à des longueurs d'onde de focalisation respectivement dans le bleu (470 à 490 nm), le vert (520 à 570 nm) et le rouge (600 à 650 nm). De préférence, les différentes longueurs d'onde de focalisation sont toutes focalisées dans un même plan $\pi$ parallèle au plan (Oxy). Les points de focalisation associés aux trois couleurs bleu, vert et rouge s'étendent alors côte à côte, dans un même plan parallèle au plan (Oxy). Le composant optique matriciel peut ainsi former un écran d'affichage en couleurs.

Selon une variante non représentée, le composant optique matriciel comporte une pluralité de matrices de lentilles holographiques, superposées les unes sur les autres le long de l'axe (Oz), du côté du support opposé à la matrice de réflecteurs. De manière avantageuse, dans chacune desdites matrices les lentilles holographiques présentent toutes une même longueur d'onde de focalisation, et les différentes matrices de lentilles holographiques présentent chacune une longueur d'onde de focalisation distincte. Les différentes matrices de lentilles holographiques présentent par exemple respectivement une longueur d'onde de focalisation dans le bleu (470 à 490 nm), le vert (520 à 570 nm) et le rouge (600 à 650 nm). Les différentes longueurs d'onde de focalisation sont de préférence toutes focalisées dans un même plan $\pi$ parallèle au plan (Oxy). Ce plan reçoit ainsi une série de points de focalisation polychromatiques, formés chacun par la superposition de points de focalisation associés respectivement au bleu, au vert et au rouge. Là encore, le composant optique matriciel peut ainsi former un écran d'affichage en couleurs.

Selon une autre variante non représentée, les cellules individuelles du composant optique matriciel ne sont pas toutes configurées pour réaliser une focalisation dans l'axe d'un faisceau lumineux arrivant sur elles à incidence normale. En particulier, le composant optique matriciel peut comporter différents types de cellules individuelles, qui diffèrent par la longueur d'onde de focalisation associée et par le décalage latéral du point de focalisation associé relativement au centre de ladite cellule. Les différents types de cellules individuelles peuvent être répartis selon une grille de répartition régulière, constituée de macro-cellules qui comportent chacune au moins une cellule individuelle de chaque type. Chaque macro-cellule peut être associée à une même et unique position du point de focalisation. Les différentes longueurs d'onde de focalisation sont de préférence toutes focalisées dans un même plan $\pi$ parallèle au plan (Oxy). Ce plan reçoit ainsi une série de points de focalisation polychromatiques, formés chacun par la superposition de points de focalisation associés par exemple respectivement au bleu, au vert et au rouge. Là encore, le composant optique matriciel peut ainsi former un écran d'affichage en couleurs.

Selon une autre variante avantageuse, les réflecteurs 131 de la matrice de réflecteurs peuvent être formés chacun par un miroir dichroïque, optiquement réfléchissant à l'au moins une longueur d'onde de focalisation par les lentilles holographiques 111 et optiquement transparents aux autres longueurs d'onde. Le composant optique matriciel selon l'invention présente alors l'avantage d'être optiquement transparent.

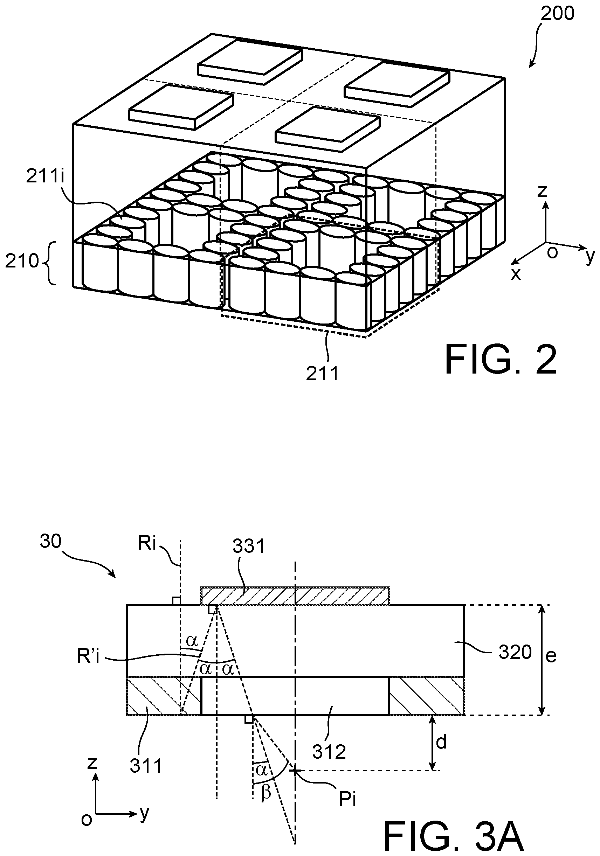

La figure 2 illustre de façon schématique, et selon une vue en transparence et en perspective, un composant optique matriciel 200 selon un deuxième mode de réalisation de l'invention.

Le composant matriciel 200 ne diffère du premier mode de réalisation qu'en ce que chacune des lentilles holographiques 211 de la matrice 210 de lentilles holographiques est formée par une pluralité d'hologrammes élémentaires en réflexion 211i. Les hologrammes élémentaires 211i présentent ici chacun une forme de cylindre de révolution, de génératrice parallèle à l'axe (Oz). Pour des raisons de lisibilité de la figure, les hologrammes élémentaires 211i sont représentés adjacents les uns aux autres. En pratiques, ils peuvent être partiellement superposés deux à deux, de manière à limiter des surfaces non écrites entre des hologrammes élémentaires voisins. Chaque hologramme élémentaire 211i est configuré pour renvoyer dans une direction prédéterminée un faisceau de rayons arrivant sur lui à incidence normale. Chaque lentille holographique comporte par exemple au moins 16 hologrammes élémentaires. Plus le nombre d'hologrammes élémentaires est important, meilleure est la focalisation par la lentille holographique.

Un procédé de fabrication d'une telle lentille holographique est décrit dans l'article « Holographie Recording Setup for Integrated See-Through Near-Eye Display Evaluation », Christophe Martinez & al., Imaging and Applied Optics 2017, OSA Technical Digest (Optical Society of America, 2017), paper JTu54.36. Ce procédé est basé sur un échantillonnage angulaire de la fonction optique de la lentille, selon un maillage d'hologrammes élémentaires. Il utilise un banc d'impression avec une fibre optique mobile pour orienter successivement à différentes valeurs d'angle d'incidence le faisceau objet, tandis que le faisceau de référence reste fixe. A chaque décalage de position de la fibre optique, une couche d'écriture en matériau photosensible est décalée latéralement relativement aux faisceaux objet et de référence, de manière à inscrire successivement la pluralité d'hologrammes élémentaires.

Chacune des cellules individuelles du composant optique matriciel 200 peut être configurée de manière à focaliser dans l'axe d'incidence un faisceau lumineux arrivant sur lui à incidence normale. En variante, les hologrammes élémentaires peuvent être adaptés pour que le point de focalisation associé à la cellule individuelle soit décalé latéralement relativement l'axe d'incidence.

La figure 3A illustre, selon une vue en coupe dans un plan (Oyz), une cellule individuelle 30 d'un composant optique matriciel tel qu'illustré en figure 1A, ainsi que le trajet suivi par un rayon lumineux Ri arrivant à incidence normale sur ladite cellule individuelle 30, du côté du réflecteur 331.

Ce rayon lumineux Ri arrive sur la cellule individuelle dans une région de la cellule individuelle non recouverte par le réflecteur 331. Il traverse le support 320 sans être dévié (du fait de son incidence normale), et parvient jusqu'à la lentille holographique 311.

Au niveau de la lentille holographique 311, il est renvoyé en direction du réflecteur 311, en formant un angle α avec la normale au plan de la cellule individuelle (où le plan de la cellule individuelle est parallèle à l'axe (Oxy)). On note R'i ledit rayon renvoyé par la lentille holographique 311.

Le rayon R'i parvient jusqu'au réflecteur 311, où il est réfléchi selon une réflexion dite spéculaire, c'est-à-dire selon un axe formant un angle α, en valeur absolue, avec la normale au plan de la cellule individuelle. Le rayon R'i se propage ensuite dans le support 320, puis traverse l'ouverture 312 au centre de la lentille holographique 311. Les indices optiques du support 320 et du matériau photosensible remplissant l'ouverture 312 sont proches, de sorte que l'on néglige ici l'effet de la réfraction à l'interface entre ces deux milieux.

Ce rayon émerge ensuite hors du composant optique matriciel selon l'invention. Il est dévié par réfraction à l'interface entre le matériau photosensible remplissant l'ouverture 312 et le milieu environnant (généralement de l'air). Il se propage alors jusqu'au point de focalisation Pi, selon un axe formant un angle β avec la normale au plan de la cellule individuelle. On a également représenté, sur la figure 3A, le rayon tel qu'il émergerait du composant optique matriciel en l'absence de réfraction.

On définit une distance d, nommée distance de travail, qui est la distance entre le point de focalisation Pi et la face inférieure du composant optique matriciel, du côté opposé à la matrice de réflecteurs. On définit également une épaisseur e, qui est la distance entre une face supérieure du support 320, du côté des réflecteurs, et ladite face inférieure du composant optique matriciel. On considère également que le composant optique matriciel présente un même indice optique n dans tout son volume. Cette approximation est réaliste.

On peut considérer que le rendement de focalisation de la lentille holographique 311 est de 100%, et que le réflecteur 331 ne réduit pas ce rendement. Le rendement de focalisation de la cellule individuelle 331 est donc défini par le rapport η entre la surface de la cellule individuelle non recouverte par le réflecteur 331 et la surface totale de la cellule individuelle.

Dans l'approximation des petits angles (selon laquelle sin(θ)=θ et cos(θ)=1), et avec un réflecteur 331 dont la forme est une homothétie de la section de la cellule individuelle (par exemple un réflecteur carré dans une cellule individuelle carré), on a :

$$\eta = 1 - \left(1 - \frac{e}{n * d + 2e}\right)^2 \qquad (1)$$

On peut montrer que, dans cette configuration et avec les approximations considérées, le rendement de focalisation peut atteindre 75%. Ce rendement est d'autant plus élevé que la distance de travail d est faible. En d'autres termes, ce rendement est d'autant plus élevé que l'épaisseur e définie ci-dessus est proche de la moitié de la focale f de la lentille holographique 311 (du fait du repliement de faisceau).

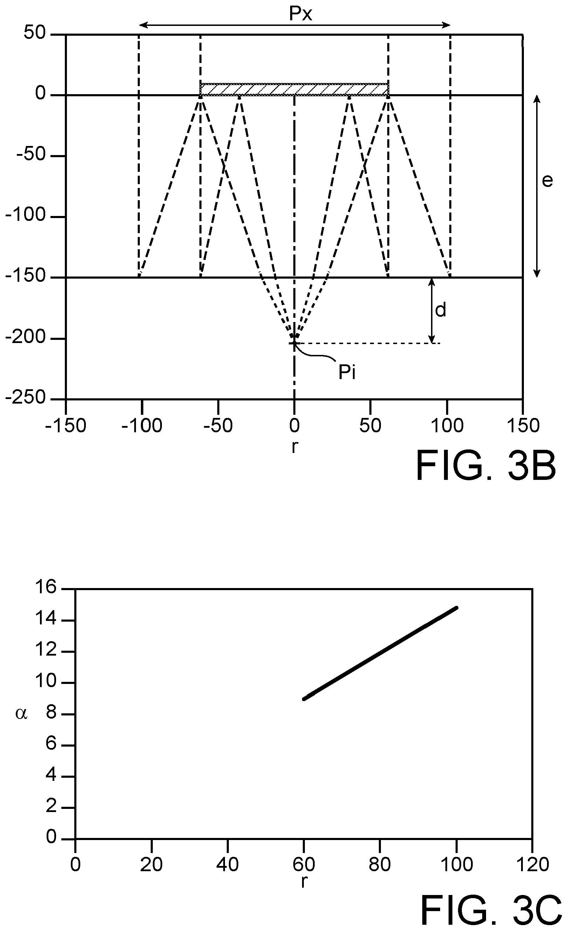

En pratique, on peut dimensionner la cellule individuelle à partir d'un pas de répartition Px des cellules individuelles, d'une épaisseur e et d'une distance d souhaités. On déduit de ces données la taille du réflecteur (voir figure 3B, où l'on a e=150 μm, d=53 μm, et Px=100 μm). On déduit ensuite de la taille du réflecteur le rendement de focalisation du composant optique matriciel (63% dans l'exemple de la figure 3B).

On définit la focale f de la lentille holographique 331 à l'aide de la relation :

$$f = 2 * e + d \qquad (2)$$

Dans le mode de réalisation de la figure 2, la lentille holographique est constituée d'une pluralité d'hologrammes élémentaires réalisant chacun une déviation de faisceau d'un angle déterminé α. Afin de reproduire le comportement d'une lentille de focale f, l'angle α suit une fonction qui dépend de la distance r entre un axe central de la cellule individuelle considérée, et un axe central de l'hologramme élémentaire considéré. Dans l'approximation des petits angles, on montre que cette fonction est définie par :

$$\alpha = \tan^{-1}\left(\frac{r}{2e + n * d}\right) \qquad (3)$$

La figure 3C illustre la valeur de l'angle α (en degrés d'angle) en fonction de r (en μm), pour e=150 μm et d=53 μm.

On remarque que la fonction de l'équation (3) n'est valable que dans l'approximation des petits angles, correspondant à une faible valeur de l'ouverture numérique (faible valeur du rapport entre le pas Px et l'épaisseur e). Pour de fortes valeurs de l'ouverture numérique, la valeur de l'angle α suit une fonction plus complexe (que l'on peut aisément définir à l'aide de la relation de Snell-Descartes).

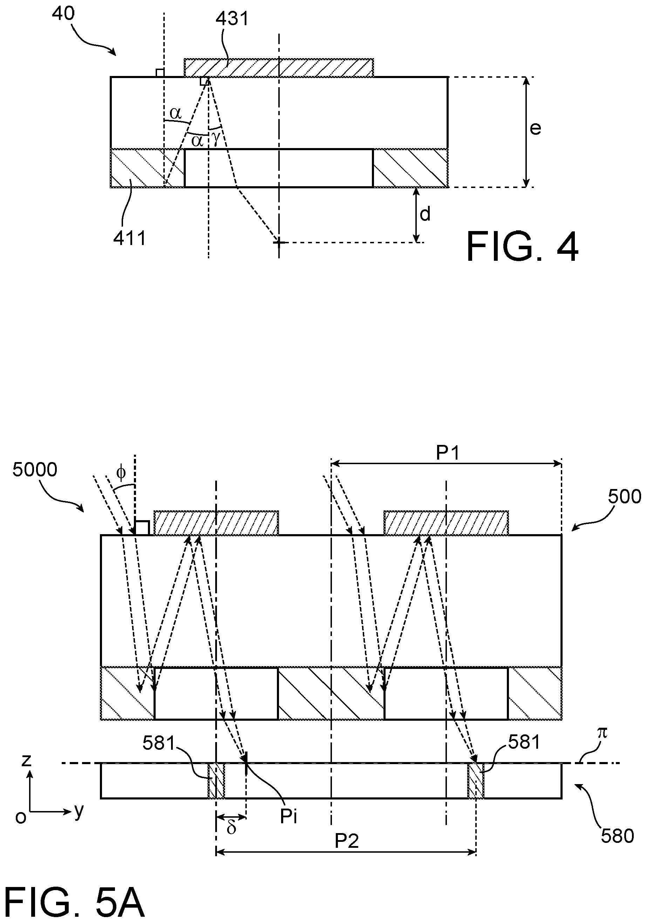

La figure 4 illustre de façon schématique, et selon une vue en coupe, une cellule individuelle 40 d'un composant optique matriciel selon un troisième mode de réalisation de l'invention.

Ce mode de réalisation ne diffère de celui des figures 1A et 1B qu'en ce que, dans chaque cellule individuelle 40, le réflecteur 431 n'est pas formé par un élément de réflexion spéculaire mais par une lentille holographique travaillant en réflexion. Ladite lentille peut être constituée d'un unique hologramme en réflexion, ou d'une pluralité d'hologrammes élémentaires en réflexion tels que décrits ci-dessus.

Par conséquent, un rayon lumineux arrivant sur le réflecteur 431 en étant incliné d'un angle α relativement à la normale au plan du réflecteur n'est pas nécessairement renvoyé dans une direction inclinée d'un angle α en valeur absolue relativement à ladite normale. Il est renvoyé ici dans une direction inclinée d'un angle γ distinct de α en valeur absolue. La valeur de l'angle γ peut être fonction de la distance r' entre un axe central de la cellule individuelle et un point d'incidence du rayon lumineux sur le réflecteur 431. En variante, la valeur de l'angle γ peut être une constante qui ne dépend pas de la position du point d'incidence considéré sur le réflecteur 431.

Ce mode de réalisation permet notamment d'adapter le réflecteur 431 de manière à garantir un rendement de focalisation élevé, même pour une distance de travail d élevée.

Dans un mode de réalisation particulier, la lentille holographique 411 est configurée pour renvoyer, selon une même orientation, tout rayon lumineux arrivant sur elle à incidence normale, quel que soit le point d'incidence de ce rayon sur ladite lentille. En d'autres termes, l'angle d'inclinaison α du rayon renvoyé par ladite lentille est une constante. Une telle caractéristique est aisément mise en oeuvre lorsque la lentille holographique est constituée d'une pluralité d'hologrammes élémentaires, comme illustré en figure 2. Les rayons lumineux renvoyés par la lentille holographique 411 arrivent donc sur le réflecteur 431 tous selon le même angle d'incidence α (en valeur absolue). On a par exemple (avec un réflecteur dont le côté est deux fois moins large que le côté de la cellule individuelle) :

$$\alpha = \tan^{-1}\left(\frac{Px}{2 * e}\right) \qquad (4)$$

où Px est le pas de répartition des cellules individuelles et e l'épaisseur telle que définie ci-dessus.

On en déduit une fonction définissant la valeur prise par l'angle γ en fonction de la position considérée sur le réflecteur, et permettant d'obtenir la distance de travail d désirée. On peut montrer que lorsque la valeur de la distance de travail est élevée, notamment en comparaison avec l'épaisseur e définie ci-dessus, il est ainsi possible de retrouver un rendement de focalisation élevé. Par exemple, pour e=60 μm, d= 500 μm, et Px=130 μm, cette variante permet d'obtenir un rendement de focalisation de 75%, alors que ce rendement ne serait que de 13% dans les modes de réalisation avec un réflecteur à réflexion spéculaire. En particulier, cette variante permet de réduire un taux de recouvrement de la cellule individuelle par le réflecteur, ce qui augmente le rendement de focalisation.

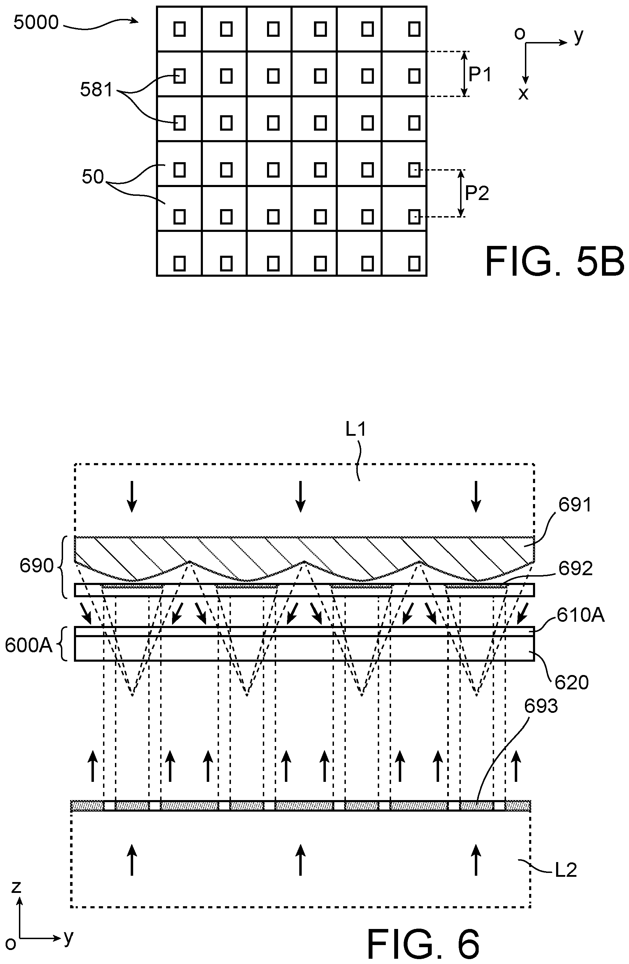

Les figures 5A et 5B illustrent de façon schématique un système optique 5000 selon l'invention, respectivement selon une vue en coupe et selon une vue de dessus. Le système optique 5000 comporte un composant optique matriciel 500 selon l'invention, dans lequel les cellules individuelles sont réparties selon une grille de répartition à maillage régulier, ici un maillage carré de pas P1. Le système optique 5000 comporte également des photodétecteurs 581, formant ensemble une matrice 580 de photodétecteurs.

Le composant optique matriciel 500 et la matrice 580 de photodétecteurs sont superposés l'un au-dessus de l'autre le long de l'axe (Oz), où l'axe (Oz) est orthogonal au plan du capteur optique matriciel 500 et au plan de la matrice 580 de photodétecteurs. La matrice 580 de photodétecteurs s'étend en particulier dans le plan π recevant les points de focalisation des différentes cellules individuelles du capteur optique matriciel 500.

Chaque photodétecteur 581 de la matrice 580 de photodétecteurs s'étend au regard d'une cellule individuelle respective 50 du composant optique matriciel 500. De préférence, à chaque cellule individuelle 50 du composant optique matriciel 500 correspond un et unique photodétecteur de la matrice 580 de photodétecteurs.

Les photodétecteurs 581 présentent chacun une surface de détection d'aire inférieure à celle d'une cellule individuelle 50 du composant optique matriciel 500, et ils ne sont pas tous positionnés de la même manière relativement à la cellule individuelle correspondante 50.

Ici, et de manière avantageuse, les photodétecteurs 581 sont répartis selon une grille de répartition de maillage carré et de pas P2 distinct de P1 (ici, strictement supérieur à P1). Ainsi, d'une cellule individuelle 50 à l'autre du composant optique matriciel, le décalage latéral entre le centre de ladite cellule individuelle 50 et le centre du photodétecteur 581 correspondant varie légèrement. On peut ainsi couvrir une pluralité de décalages latéraux, selon chacun des axes (Ox) et (Oy), entre le centre d'une cellule individuelle 50 et le centre du photodétecteur 581 correspondant (voir figure 5B).

Comme illustré en figure 5A, lorsque les rayons lumineux incidents sur le composant optique matriciel 500 sont inclinés d'un angle φ relativement à la normale audit composant, cela se traduit par des décalages latéraux respectifs δ entre les points de focalisation Pi de ces rayons dans le plan π et les axes centraux respectifs des cellules individuelles 50 du composant optique matriciel 500. En fonction de la position du photodétecteur 581 relativement au centre de la cellule individuelle 50, ledit photodétecteur 581 va donc recevoir ou non un rayonnement lumineux. Ainsi, par exemple, parmi tous les photodétecteur 581 de la matrice 580 de photodétecteurs, seul celui (ou ceux) présentant ce décalage δ relativement au centre de la cellule individuelle 50 correspondant va détecter un signal. Sachant quel photodétecteur 581 détecte un signal, on peut déterminer l'angle d'inclinaison φ des rayons lumineux incidents sur le composant optique matriciel 500. En variante, plusieurs photodétecteurs 581 vont détecter un signal, et la détermination de l'angle d'inclinaison φ consistera à rechercher le photodétecteur recevant le signal le plus intense. Le système 5000 peut ainsi former un capteur de position angulaire, pour mesurer un angle d'inclinaison d'un faisceau lumineux incident.

Selon des variantes non représentées, on peut avoir plus de photodétecteurs que de cellules individuelles du composant optique matriciel, ou l'inverse.

Le composant optique matriciel 500 peut correspondre à l'un quelconque des modes de réalisation de l'invention. De manière avantageuse, les réflecteurs de sa matrice de réflecteurs sont des miroirs dichroïques. On peut ainsi réaliser un écran transparent offrant en outre une fonction de capteur angulaire.

La figure 6 illustre de façon schématique, un premier exemple de procédé de fabrication d'un composant optique matriciel selon l'invention.

Ce procédé utilise un premier composant optique de réplication 690 (également nommé « master »), qui comporte une matrice de microlentilles 691 et une première matrice de filtres spatiaux 692, superposées le long de l'axe (Oz) orthogonal aux plans respectifs desdites matrices.

La matrice de microlentilles 691 est une matrice de lentilles réfractives, dont les focales sont fonction des focales désirées pour les lentilles holographiques du composant optique matriciel selon l'invention.

La première matrice de filtres spatiaux 692 est une matrice d'éléments opaques, définissant la forme des lentilles holographiques du composant optique matriciel selon l'invention. Chacun des filtres spatiaux de ladite matrice est ici centré sur l'axe optique de l'une respective des microlentilles de la matrice de microlentilles 691.

Le composant optique de réplication 690 est superposé au-dessus d'un empilement 600A comportant un support 620 et une couche d'écriture 610A en matériau photosensible, avec le plan du composant optique de réplication 690 parallèle au plan de cet empilement, et avec la première matrice de filtres spatiaux 692 située en vis-à-vis de la couche d'écriture 610A.

Une seconde matrice de filtres spatiaux 693 est disposée en-dessous de l'empilement 600A, en vis-à-vis du support 620, et avec le plan de la seconde matrice de filtres spatiaux 693 parallèle au plan de l'empilement 610A.

Un faisceau laser est scindé en deux sous-faisceaux collimatés L1, L2, arrivant tous deux à incidence normale sur l'ensemble comportant le composant optique de réplication 690, l'empilement 600A et la seconde matrice de filtres spatiaux 693, l'un du côté du composant optique de réplication 690, l'autre du côté de la seconde matrice de filtres spatiaux 693. Les sous-faisceaux L1 et L2 forment respectivement un faisceau lumineux objet et un faisceau lumineux de référence, pour inscrire dans la couche d'écriture 610A des lentilles holographiques de la matrice de lentilles holographiques d'un composant optique matriciel selon l'invention.

De préférence, la matrice complète de lentilles holographiques est réalisée en plusieurs étapes élémentaires d'inscription, entre lesquels l'empilement 600A est translaté latéralement relativement au composant optique de réplication 690 et à la seconde matrice de filtres spatiaux 693. On finalise ensuite la fabrication du composant optique matriciel en réalisant la matrice de réflecteurs, sur le support 620, du côté opposé à la matrice de lentilles holographiques.

En variante, on peut réaliser un composant optique matriciel selon l'invention en utilisant le procédé décrit en référence à la figure 2 pour réaliser des lentilles holographiques constituées d'hologrammes élémentaires. On inscrit alors les hologrammes élémentaires dans un empilement comportant, superposés, une couche d'écriture en matériau photosensible, un substrat et une matrice de réflecteurs, avec le substrat entre la matrice de réflecteurs et la couche d'écriture. Le faisceau lumineux de référence arrive sur l'empilement du côté de la matrice de réflecteurs. Le faisceau lumineux objet arrive sur l'empilement du côté de la couche d'écriture, et se réfléchit sur les réflecteurs de la matrice de réflecteurs.

Cette variante offre une plus grande flexibilité que le premier exemple de procédé décrit ci-dessus, car un même banc d'impression permet de réaliser toutes sortes de lentilles holographiques.

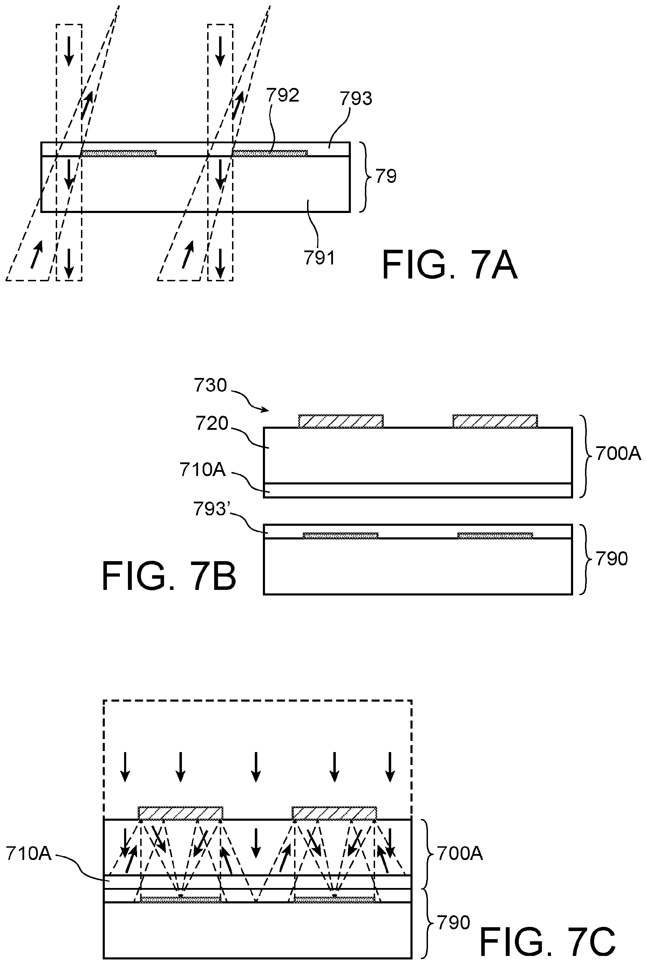

Afin de pouvoir réaliser rapidement des composants optiques matriciels de grandes dimensions, et dans lesquels chaque lentille holographique est formée d'une quantité suffisante d'hologrammes élémentaires, les inventeurs proposent également une variante utilisant un composant optique de réplication, ou master. Les figures 7A à 7E illustrent de façon schématique l'ensemble des étapes du procédé de fabrication selon cette variante.

Dans une étape préliminaire illustrée en figure 7A, on fabrique un composant optique de réplication, par inscription d'une matrice primaire de lentilles holographiques en réflexion dans un empilement 79. L'empilement 79 comporte, superposés, un substrat 791, une matrice de filtres spatiaux 792, et une première couche d'écriture 793, avec la matrice de filtres spatiaux 792 entre le substrat 791 et la première couche d'écriture 793. Ladite inscription est réalisée à l'aide d'un procédé tel que celui mentionné en référence à la figure 2, par insolation de l'empilement 79, à l'aide d'un faisceau de référence et d'un faisceau objet prenant successivement différentes orientations. Le faisceau de référence arrive à incidence normale sur l'empilement 79, du côté de la première couche d'écriture 793. Le faisceau objet arrive sur l'empilement 79 du côté du substrat 791. La matrice de filtres spatiaux 792 est formée par une série d'éléments opaques, qui bloquent la lumière à la longueur d'onde d'insolation par les faisceaux objet et de référence.

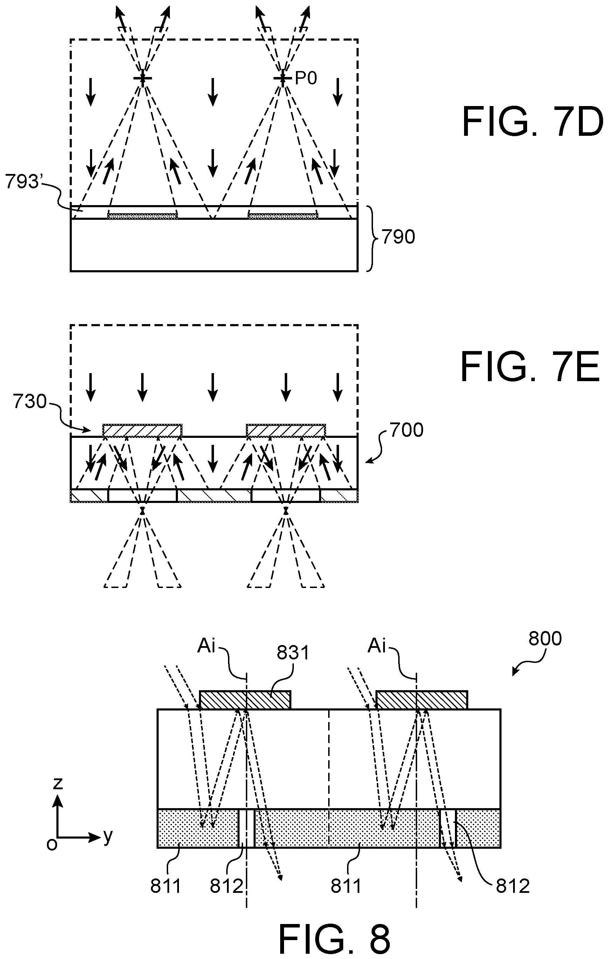

La figure 7D illustre le composant optique de réplication 790 ainsi réalisé, en utilisation. Le composant optique de réplication est illuminé par un faisceau lumineux arrivant sur lui à incidence normale, du côté de la matrice primaire 793' de lentilles holographiques. Il renvoie en réponse des rayons qui se concentrent en différents points de focalisation P0, à l'extérieur du composant optique de réplication 790 et du côté de la matrice primaire 793' de lentilles holographiques. Chaque lentille holographique de ladite matrice primaire 793' est munie d'une ouverture qui reçoit un élément opaque de la matrice de filtres spatiaux 792. Ces éléments opaques définissent ultérieurement les ouvertures traversantes dans les lentilles holographiques du composant optique matriciel selon l'invention. De préférence, dans chaque holographique de ladite matrice primaire 793', l'ouverture est centrée sur ladite lentille holographique et est agencée concentrique avec l'élément opaque correspondant.

Pour réaliser un composant optique matriciel selon l'invention, on superpose le composant optique de réplication 790 et un ensemble d'écriture 700A. Ledit ensemble d'écriture 700A comporte, superposés, une seconde couche d'écriture 710A, un support 720, et une matrice de réflecteurs 730, avec le support 720 disposé entre la seconde couche d'écriture 710A et la matrice de réflecteurs 730. A l'issue de cette étape, la seconde couche d'écriture 710A se trouve entre le support 720 et la matrice primaire 793' de lentilles holographiques (voir figure 7B). Ici, la seconde couche d'écriture 710A et la matrice primaire 793' de lentilles holographiques sont en contact physique direct l'une avec l'autre. En variante, elles peuvent être séparées l'une de l'autre par une couche d'écartement optiquement transparente à une longueur d'onde d'insolation de la seconde couche d'écriture 710A. En tout état de cause, chaque élément opaque de la matrice de filtres spatiaux 792 est aligné ici avec un réflecteur de la matrice de réflecteurs 730.

Ensuite, on inscrit une matrice secondaire de lentilles holographiques dans la seconde couche d'écriture 710A, par insolation d'un empilement formé par l'ensemble d'écriture 700A et le composant optique de réplication 790 superposés. L'insolation est réalisée à l'aide d'un faisceau lumineux arrivant à incidence normale sur ledit empilement, du côté de la matrice de réflecteurs 730 (voir figure 7C). C'est donc une lecture du composant optique de réplication 790 qui permet d'inscrire ladite matrice secondaire de lentilles holographiques. Le faisceau de référence est formé par le faisceau lumineux arrivant à incidence normale sur l'empilement. Le faisceau objet est formé par le faisceau renvoyé en réponse par la matrice primaire 793' de lentilles holographiques et réfléchi sur les réflecteurs de la matrice 730 de réflecteurs. Le faisceau objet ainsi réfléchi se concentre en une pluralité de points de focalisation. On met ensuite en oeuvre une translation latérale du composant optique de réplication 790 relativement à l'ensemble d'écriture 700A, et on répète l'étape d'inscription d'une matrice secondaire de lentilles holographiques dans la seconde couche d'écriture 710A. On réalise de préférence une translation d'une distance égale à la dimension du composant optique de réplication selon l'axe de la translation. Les étapes de translation et nouvelle inscription sont mises en oeuvre plusieurs fois, jusqu'à inscrire toute la surface de la seconde couche d'écriture 710A. Enfin, on retire le composant optique de réplication 790.

La figure 7E illustre le composant optique matriciel 700 ainsi réalisé, en utilisation, lorsqu'il est illuminé par un faisceau lumineux arrivant sur lui à incidence normale, du côté de la matrice de réflecteurs 730.

Le procédé décrit ci-dessus permet d'inscrire rapidement des lentilles holographiques constituées chacune d'une pluralité d'hologrammes élémentaires.

Un procédé similaire peut néanmoins être mis en oeuvre, dans lequel la matrice primaire de lentilles holographiques, dans le composant optique de réplication, est réalisée par insolation au travers d'une matrice de microlentilles réfractives.

L'invention n'est pas limitée aux exemples décrits ci-dessus, et de nombreuses variantes peuvent être mises en oeuvre sans sortir du cadre de l'invention.

Par exemple, on a décrit des modes de réalisation dans lesquels la matrice de réflecteurs s'étend directement sur une première face du support, et la matrice de lentille holographique s'étend directement sur une seconde face du support, du côté du support opposé à ladite première face. En variante, au moins une couche intercalaire peut s'étendre entre le support et la matrice de lentilles holographiques, respectivement entre le support et la matrice de réflecteurs. Une telle couche intercalaire est optiquement transparente à au moins une longueur d'onde de focalisation par la matrice de lentilles holographiques.

L'invention n'est pas limitée à des lentilles holographiques, respectivement des réflecteurs, répartis selon une grille de répartition à maillage carré. Toutes sortes de maillages peuvent être mis en oeuvre sans sortir du cadre de l'invention, par exemple un maillage triangulaire ou hexagonal. De préférence, la forme des lentilles holographiques est cependant adaptée pour permettre qu'elles soient agencées adjacentes deux à deux, sans espace libre entre elles. Les réflecteurs de la matrice de réflecteurs peuvent être reliés deux à deux par des portions en matériau des réflecteurs, tant qu'une quantité suffisante de lumière peut atteindre le support et la matrice de lentilles holographiques. Dans chaque cellule individuelle, la section de l'ouverture dans la lentille holographique ne correspond pas forcément à la forme du réflecteur. L'ouverture dans une lentille holographique peut être un peu plus étendue, ou un peu moins étendue que le réflecteur, dans des plans parallèles au plan du composant optique matriciel. En outre, la section de l'ouverture dans la lentille holographique n'est pas nécessairement une homothétie de la forme du réflecteur.

Dans tout le texte, on a décrit un fonctionnement en réception, dans lequel le composant optique matriciel selon l'invention reçoit un faisceau incident collimaté qu'il focalise sur une série de points de focalisation. Le même composant peut être également utilisé en émission, pour émettre un faisceau d'émission collimaté à l'aide de sources lumineuses disposées auxdits points de focalisation.

Dans tout le texte, on a décrit des ouvertures traversantes dans les lentilles holographiques centrées chacune sur la cellule individuelle associée. En variante, dans l'une au moins, ou dans toutes les cellules individuelles du composant otique matriciel, l'ouverture dans la lentille holographique respective de chacune parmi l'au moins une matrice de lentilles holographiques est décalée relativement à un axe central de ladite cellule individuelle. Dit autrement, dans l'une au moins des cellules individuelles, l'ouverture traversante dans la lentille holographique est décentrée. La figure 8 illustre une telle variante. Le composant optique matriciel 800 de la figure 8 ne diffère du premier mode de réalisation de l'invention qu'en ce que, dans l'une au moins des cellules individuelles, l'ouverture traversante 810 dans la lentille holographique 811 est décentrée relativement à l'axe central Ai, où Ai est parallèle à (Oz) et centré sur la cellule individuelle correspondante. Dans l'exemple illustré en figure 8, chaque ouverture traversante 812 présente en outre des dimensions réduites dans un plan (xOy). Par exemple, un rapport entre la section des réflecteurs 831 et la section des ouvertures traversantes 812, dans des plans (xOy), est supérieur ou égal à 10. On peut ainsi réaliser un capteur angulaire, sur le même principe que celui illustré aux figures 5A et 5B, avec un composant optique matriciel dans lequel chaque cellule individuelle comporte une ouverture traversante décalée d'une valeur distincte relativement à l'axe central Ai de ladite cellule. Les positions des ouvertures traversantes dans les cellules individuelles sont définies, à la fabrication, par les positions des éléments opaques mentionnés ci-avant. Lesdits éléments opaques peuvent donc être décentrés relativement aux cellules individuelles en cours de fabrication.

Selon d'autres variantes encore, dans l'une au moins des cellules individuelles, le réflecteur est décentré. Selon d'autres variantes, le composant optique matriciel est configuré pour réaliser une focalisation hors d'axe d'un faisceau lumineux arrivant à incidence normale sur ses cellules individuelle. Pour cela, le procédé de fabrication de la matrice de lentilles holographiques met en oeuvre des faisceaux inclinés en biais relativement à la couche d'écriture.

Les différentes cellules individuelles du composant optique matriciel peuvent être réparties selon un maillage régulier, ou non.

L'invention trouve à s'appliquer dans de nombreux domaines tels que la détection de front d'onde, l'acquisition d'image en trois dimensions, la visualisation d'images en trois dimensions, la mesure d'angle d'inclinaison d'un faisceau lumineux, etc.

**Revendications**

1. Composant optique matriciel (100 ; 200 ; 500 ; 700 ; 800), comportant une pluralité de cellules individuelles (10 ; 30 ; 40 ; 50) et configuré pour focaliser en une pluralité de points (Pi) un faisceau lumineux incident, et qui comprend :

   - un support (120 ; 320 ; 620 ; 720) ;
   - une matrice de réflecteurs (130 ; 730) ; et
   - au moins une matrice de lentilles holographiques (110 ; 210), dans laquelle chaque lentille holographique (111 ; 311 ; 411; 811) est formée par au moins un hologramme en réflexion ;
   avec le support (120 ; 320 ; 620 ; 720) disposé entre la matrice de réflecteurs et l'au moins une matrice de lentilles holographiques,
   avec chaque cellule individuelle (10 ; 30 ; 40 ; 50) du composant optique matriciel qui comporte un réflecteur (131 ; 331; 431; 831) de la matrice de réflecteurs et une lentille holographique respective (111; 211; 311; 411; 811) de chacune parmi l'au moins une matrice de lentilles holographiques, avec le réflecteur et la lentille holographique disposés en vis-à-vis de part et d'autre du support et avec des faces réfléchissantes respectives dudit réflecteur et de ladite lentille holographique situées face à face, et
   avec chaque lentille holographique (111; 311; 411; 811) de l'au moins une matrice de lentilles holographiques (110 ; 210) qui est munie d'une ouverture traversante (112 ; 312 ; 812) respective, pour laisser passer la lumière au niveau de chacune des cellules individuelles (10 ; 30 ; 40 ; 50) du composant optique matriciel.

2. Composant optique matriciel (100 ; 200 ; 500 ; 700) selon la revendication 1, **caractérisé en ce que** dans l'une au moins des cellules individuelles (10 ; 30 ; 40 ; 50), ouverture traversante (112 ; 312) dans la lentille holographique respective (111; 211; 311 ; 411) de chacune parmi l'au moins une matrice de lentilles holographiques est centrée sur ladite cellule individuelle.

3. Composant optique matriciel (100 ; 200 ; 500 ; 700 ; 800) selon la revendication 1 ou 2, **caractérisé en ce que** dans l'une au moins des cellules individuelles (10 ; 30 ; 40 ; 50), ladite ouverture traversante (112 ; 312 ; 812) s'étend selon une surface inscrite à l'intérieur d'une projection du réflecteur (131 ; 331 ; 431 ; 831) dans le plan de l'au moins une matrice de lentilles holographiques.

4. Composant optique matriciel (100; 200 ; 500 ; 700 ; 800) selon l'une quelconque des revendications 1 à 3, **caractérisé en ce qu'**il est configuré pour focaliser en une série de points prédéterminés (Pi) un faisceau lumineux arrivant à incidence normale sur ses cellules individuelles, avec les points de ladite série de points prédéterminés qui s'étendent tous dans un même plan ($\pi$) parallèle au support (120 ; 320 ; 620 ; 720).

5. Composant optique matriciel (100 ; 200 ; 500 ; 700 ; 800) selon la revendication 4, **caractérisé en ce que** ledit plan ($\pi$) parallèle au support est situé à l'extérieur du composant optique matriciel, du côté de l'au moins une matrice de lentilles holographiques (110).

6. Composant optique matriciel selon l'une quelconque des revendications 1 à 5, **caractérisé en ce que** dans l'une au moins des cellules individuelles, le réflecteur est formé par un miroir dichroïque, optiquement réfléchissant à au moins une longueur d'onde de focalisation par chaque lentille holographique de la même cellule individuelle.

7. Composant optique matriciel selon l'une quelconque des revendications 1 à 6, **caractérisé en ce que** dans l'une au moins des cellules individuelles (40), le réflecteur (431) est formé par au moins un hologramme en réflexion.

8. Composant optique matriciel selon la revendication 7, **caractérisé en ce que** ledit réflecteur (431) est apte à réfléchir la lumière selon un angle de réflexion ($\gamma$) distinct de l'angle d'incidence ($\alpha$), en valeur absolue.

9. Composant optique matriciel (200) selon l'une quelconque des revendications 1 à 8, **caractérisé en ce que** dans l'une au moins des cellules individuelles, la lentille holographique (211) respective de chacune parmi l'au moins une matrice de lentilles holographiques (210) est formée d'une pluralité d'hologrammes élémentaires (211i) configurés chacun pour dévier la lumière d'un angle prédéterminé.

10. Composant optique matriciel selon l'une quelconque des revendications 1 à 9, **caractérisé en ce qu'**il comporte une pluralité de matrices de lentilles holographiques, superposées les unes aux autres le long d'un axe orthogonal au plan d'une face inférieure du support, et configurées chacune pour focaliser la lumière à une longueur d'onde prédéterminée distincte.

**11.** Composant optique matriciel selon l'une quelconque des revendications 1 à 9, **caractérisé en ce qu'**il comporte une unique matrice de lentilles holographiques, comportant différents types de lentilles holographiques qui diffèrent les unes des autres par leur longueur d'onde de focalisation.

**12.** Système optique (5000) comportant, superposés, un composant optique matriciel (500) selon l'une quelconque des revendications 1 à 11 et une matrice de photodétecteurs (580), et dans lequel les cellules individuelles (50) du composant optique matriciel sont réparties selon au moins un premier pas de répartition (P1) et les photodétecteurs (581) de la matrice de photodétecteurs sont répartis selon au moins un second pas de répartition (P2), avec les premier et second pas de répartition qui sont distincts l'un de l'autre et qui ne sont pas multiples l'un de l'autre.

**13.** Composant optique de réplication (790) pour la fabrication d'un composant optique matriciel selon l'une quelconque des revendications 1 à 11, qui comporte, superposés, une matrice primaire de lentilles holographiques (793'), une matrice d'éléments opaques (792) et un substrat (791), avec la matrice d'éléments opaques disposée entre le substrat et la matrice primaire de lentilles holographiques, et dans lequel :

- chaque lentille holographique de ladite matrice primaire (793') est formée d'une pluralité d'hologrammes élémentaires en réflexion, configurés chacun pour dévier la lumière d'un angle prédéterminé ; et
- chaque lentille holographique de ladite matrice primaire (793') est munie d'une ouverture à l'intérieur de laquelle se trouve l'un des éléments opaques de la matrice d'éléments opaques (792).

**14.** Procédé de fabrication d'un composant optique matriciel selon l'une quelconque des revendications 1 à 11, **caractérisé en ce qu'**il comporte les étapes suivantes :

- superposition du composant optique de réplication (790) selon la revendication 13 et d'un ensemble d'écriture (700A), où ledit ensemble d'écriture comporte, superposés, une couche d'écriture (710A) en matériau photosensible, un support (720), et une matrice de réflecteurs (730), avec le support disposé entre la couche d'écriture et la matrice de réflecteurs, et de sorte que la couche d'écriture (710A) se trouve entre le support (720) et la matrice primaire de lentilles holographiques (793') du composant optique de réplication (790) ;
- inscription d'une matrice secondaire de lentilles holographiques dans la seconde couche d'écriture (710A), par insolation de l'empilement comportant le composant optique de réplication (790) et l'ensemble d'écriture (700A) superposés ; et
- translation du composant optique de réplication (790) relativement à l'ensemble d'écriture et nouvelle inscription d'une matrice secondaire de lentilles holographiques dans la seconde couche d'écriture (710A), les étapes de translation et nouvelle inscription étant mises en oeuvre plusieurs fois.

**15.** Composant optique de réplication (690) pour la fabrication d'un composant optique matriciel selon l'une quelconque des revendications 1 à 11, qui comporte, superposés, une matrice de microlentilles (691) et une matrice de filtres spatiaux (692), où chacune desdites microlentilles est une lentille réfractive et où la matrice de filtres spatiaux comporte des éléments opaques situés chacun au regard de l'une respective desdites microlentilles.


**Patentansprüche**

**1.** Optische Matrixkomponente (100; 200; 500; 700; 800), die eine Vielzahl von einzelnen Zellen (10; 30; 40; 50) beinhaltet und konfiguriert ist, um einen einfallenden Lichtstrahl in eine Vielzahl von Punkten (Pi) zu fokussieren, und die umfasst:

- einen Träger (120; 320; 620; 720);
- eine Matrix mit Reflektoren (130; 730); und
- mindestens eine Matrix mit holographischen Linsen (110; 210), in der jede holographische Linse (111; 311; 411; 811) durch mindestens ein reflektierendes Hologramm gebildet ist;

wobei der Träger (120; 320; 620; 720) zwischen der Matrix mit Reflektoren und der mindestens einen Matrix mit holographischen Linsen angeordnet ist,
wobei jede einzelne Zelle (10; 30; 40; 50) der optischen Matrixkomponente, die einen Reflektor (131; 331; 431; 831) der Matrix mit Reflektoren und eine jeweilige holographische Linse (111; 211; 311; 411; 811) einer jeden aus der mindestens einen Matrix mit holographischen Linsen beinhaltet, wobei der Reflektor und die holographische Linse gegenüber beiderseits des Trägers, und mit den jeweiligen reflektierenden Flächen des Reflektors und der holographischen Linse, die sich einander gegenüber befinden, angeordnet sind, und

wobei jede holographische Linse (111; 311; 411; 811) der mindestens einen Matrix mit holographischen Linsen (110; 210) mit einer jeweiligen Durchgangsöffnung (112; 312; 812) versehen ist, um das Licht im Bereich einer jeden der einzelnen Zellen (10; 30; 40; 50) der optischen Matrixkomponente durchzulassen.

2. Optische Matrixkomponente (100; 200; 500; 700) nach Anspruch 1, **dadurch gekennzeichnet, dass** in mindestens einer der einzelnen Zellen (10; 30; 40; 50) eine Durchgangsöffnung (112; 312) in der jeweiligen holographischen Linse (111; 211; 311; 411) einer jeden aus der mindestens einen Matrix mit holographischen Linsen auf der einzelnen Zelle zentriert ist.

3. Optische Matrixkomponente (100; 200; 500; 700; 800) nach Anspruch 1 oder 2, **dadurch gekennzeichnet, dass** sich die Durchgangsöffnung (112; 312; 812) in mindestens einer der einzelnen Zellen (10; 30; 40; 50) entlang einer Oberfläche erstreckt, die im Inneren einer Projektion des Reflektors (131; 331; 431; 831) in der Ebene der mindestens einen Matrix mit holographischen Linsen eingeschrieben ist.

4. Optische Matrixkomponente (100; 200; 500; 700; 800) nach einem der Ansprüche 1 bis 3, **dadurch gekennzeichnet, dass** sie konfiguriert ist, um einen Lichtstrahl, der zu einem normalen Einfall auf die einzelnen Zellen gelangt, in eine Reihe von vorbestimmten Punkten (Pi) zu fokussieren, wobei sich die Punkte der Reihe von vorbestimmten Punkten allesamt in einer gleichen Ebene ($\pi$) parallel zum Träger (120; 320; 620; 720) erstrecken.

5. Optische Matrixkomponente (100; 200; 500; 700; 800) nach Anspruch 4, **dadurch gekennzeichnet, dass** sich die Ebene ($\pi$) parallel zum Träger außerhalb der optischen Matrixkomponente auf Seiten der mindestens einen Matrix mit holographischen Linsen (110) befindet.

6. Optische Matrixkomponente nach einem der Ansprüche 1 bis 5, **dadurch gekennzeichnet, dass** in mindestens einer der einzelnen Zellen der Reflektor durch einen dichroitischen, mit mindestens einer Fokussierungswellenlänge je holographische Linse der gleichen einzelnen Zelle reflektierenden Spiegel gebildet ist.

7. Optische Matrixkomponente nach einem der Ansprüche 1 bis 6, **dadurch gekennzeichnet, dass** in mindestens einer der einzelnen Zellen (40) der Reflektor (431) durch mindestens ein reflektierendes Hologramm gebildet ist.

8. Optische Matrixkomponente nach Anspruch 7, **dadurch gekennzeichnet, dass** der Reflektor (431) imstande ist, das Licht entsprechend einem Reflexionswinkel ($\gamma$) als Absolutwert, der sich vom Einfallswinkel ($\alpha$) unterscheidet, zu reflektieren.

9. Optische Matrixkomponente (200) nach einem der Ansprüche 1 bis 8, **dadurch gekennzeichnet, dass** in mindestens einer der einzelnen Zellen, die jeweilige holographische Linse (211) einer jeden aus der mindestens einen Matrix mit holographischen Linsen (210) aus einer Vielzahl von elementaren Hologrammen (211i) gebildet ist, die jeweils konfiguriert sind, um das Licht um einen vorbestimmten Winkel abzulenken.

10. Optische Matrixkomponente nach einem der Ansprüche 1 bis 9, **dadurch gekennzeichnet, dass** sie eine Vielzahl von Matrizen mit holographischen Linsen beinhaltet, die entlang einer senkrechten Achse zur Ebene einer unteren Fläche des Trägers übereinander überlagert sind, und jeweils konfiguriert sind, um das Licht mit einer unterschiedlichen vorbestimmten Wellenlänge zu fokussieren.

11. Optische Matrixkomponente nach einem der Ansprüche 1 bis 9, **dadurch gekennzeichnet, dass** sie eine einzige Matrix mit holographischen Linsen beinhaltet, die verschiedene Arten von holographischen Linsen beinhaltet, die durch ihre Fokussierungswellenlängen voneinander abweichen.

12. Optisches System (5000), das überlagert eine optische Matrixkomponente (500) nach einem der Ansprüche 1 bis 11 und eine Matrix mit Fotodetektoren (580) beinhaltet, und wobei die einzelnen Zellen (50) der optischen Matrixkomponente entsprechend mindestens einem ersten Verteilungsschritt (P1) verteilt sind, und die Fotodetektoren (581) der Matrix mit Fotodetektoren entsprechend mindestens einem zweiten Verteilungsschritt (P2) verteilt sind, wobei sich der erste und zweite Verteilungsschritt voneinander unterscheiden und kein Vielfaches voneinander sind.

13. Optische Replikationskomponente (790) zur Herstellung einer optischen Matrixkomponente nach einem der Ansprüche 1 bis 11, die überlagert eine Primär-Matrix mit holographischen Linsen (793'), eine Matrix mit opaken Elementen (792), und ein Substrat (791) beinhaltet, wobei die Matrix mit opaken Elementen zwischen dem Substrat und der Primär-Matrix mit holographischen Linsen angeordnet ist, und wobei:

- jede holographische Linse der Primär-Matrix (793') aus einer Vielzahl von elementaren Reflexionshologrammen gebildet ist, die jeweils konfiguriert sind, um das Licht um einen vorbestimmten Winkel abzulenken; und
- jede holographische Linse der Primär-Matrix (793') mit einer Öffnung versehen ist, in deren Inneren sich eines der opaken Elemente der Matrix mit opaken Elementen (792) befindet.

**14.** Verfahren zur Herstellung einer optischen Matrixkomponente nach einem der Ansprüche 1 bis 11, **dadurch gekennzeichnet, dass** es die folgenden Schritte beinhaltet:

- Überlagern der optischen Replikationskomponente (790) nach Anspruch 13, und eines Schreibsets (700A), wobei das Schreibset überlagert eine Schreibschicht (710A) aus einem lichtempfindlichen Material, einen Träger (720), und eine Matrix mit Reflektoren (730) beinhaltet, wobei der Träger zwischen der Schreibschicht und der Matrix mit Reflektoren angeordnet ist, sodass sich die Schreibschicht (710A) zwischen dem Träger (720) und der Primär-Matrix mit holographischen Linsen (793') der optischen Replikationskomponente (790) befindet;
- Einschreiben einer Sekundär-Matrix mit holographischen Linsen in die zweite Schreibschicht (710A) durch Sonnenbestrahlung der Stapelung, die die überlagerte optische Replikationskomponente (790) und das Schreibset (700A) beinhaltet; und
- Translation der optischen Replikationskomponente (790) in Bezug auf das Schreibset und erneutes Einschreiben einer Sekundär-Matrix mit holographischen Linsen in die zweite Schreibschicht (710A), wobei die Schritte der Translation und des erneuten Einschreibens mehrmals umgesetzt werden.

**15.** Optische Replikationskomponente (690) zur Herstellung einer optischen Matrixkomponente nach einem der Ansprüche 1 bis 11, die überlagert eine Matrix mit Mikrolinsen (691) und eine Matrix mit räumlichen Filtern (692) beinhaltet, wobei jede der Mikrolinsen eine Brechungslinse ist, und wobei die Matrix mit räumlichen Filtern opake Elemente beinhaltet, die sich jeweils gegenüber einer jeweiligen der Mikrolinsen befinden.

## Claims

**1.** An array optical component (100; 200; 500; 700; 800), including a plurality of individual cells (10; 30; 40; 50) and configured to focus an incident light beam at a plurality of points (Pi), and which comprises:

- a support (120; 320; 620; 720);
- an array (130; 730) of reflectors; and
- at least one array (110; 210) of holographic lenses, wherein each holographic lens (111; 311; 411; 811) is formed by at least one reflection hologram; with the support (120; 320; 620; 720) being disposed between the array of reflectors and the at least one array of holographic lenses, with each individual cell (10; 30; 40; 50) of the array optical component including a reflector (131; 331; 431; 831) of the array of reflectors and a respective holographic lens (111; 211; 311; 411; 811) of each of the at least one array of holographic lenses, with the reflector and holographic lens being disposed opposite to each other on either side of the support and with respective reflective faces of said reflector and said holographic lens being located facing each other, and with each holographic lens (111; 311; 411; 811) of the at least one array (110; 210) of holographic lenses being provided with a respective through opening (112; 312; 812) for passing light at each of the individual cells (10; 30; 40; 50) of the array optical component.

**2.** The array optical component (100; 200; 500; 700) according to claim 1, **characterised in that** in at least one of the individual cells (10; 30; 40; 50), a through opening (112; 312) in the respective holographic lens (111; 211; 311; 411) of each of the at least one array of holographic lenses is centred to said individual cell.

**3.** The array optical component (100; 200; 500; 700; 800) according to claim 1 or 2, **characterised in that** in at least one of the individual cells (10; 30; 40; 50) said through opening (112; 312; 812) extends along a surface registered within a projection of the reflector (131; 331; 431; 831) in the plane of the at least one array of holographic lenses.

**4.** The array optical component (100; 200; 500; 700; 800) according to any one of claims 1 to 3, **characterised in that** it is configured to focus a light beam impinging at normal incidence on its individual cells into a series of predetermined points (Pi), with the points of said series of predetermined points all extending in a same plane ($\pi$) parallel to the

support (120; 320; 620; 720).

5. The array optical component (100; 200; 500; 700; 800) according to claim 4, **characterised in that** said plane ($\pi$) parallel to the support is located outside the array optical component, on the side of the at least one array (110) of holographic lenses.

6. The array optical component according to any one of claims 1 to 5, **characterised in that** in at least one of the individual cells, the reflector is formed by a dichroic mirror, optically reflecting at at least one focusing wavelength by each holographic lens of the same individual cell.

7. The array optical component according to any one of claims 1 to 6, **characterised in that** in at least one of the individual cells (40), the reflector (431) is formed by at least one reflection hologram.

8. The array optical component according to claim 7, **characterised in that** said reflector (431) is able to reflect light at a reflection angle ($\gamma$) distinct from the incidence angle ($\alpha$), in absolute value.

9. The array optical component (200) according to any one of claims 1 to 8, **characterised in that** in at least one of the individual cells, the respective holographic lens (211) of each of the at least one array (210) of holographic lenses is formed by a plurality of elementary holograms (211i) each configured to deflect light by a predetermined angle.

10. The array optical component according to any one of claims 1 to 9, **characterised in that** it includes a plurality of arrays of holographic lenses, superimposed with one another along an axis orthogonal to the plane of a lower face of the support, and each configured to focus light at a distinct predetermined wavelength.

11. The array optical component according to any one of claims 1 to 9, **characterised in that** it includes a single array of holographic lenses, including different types of holographic lenses which differ from each other in their focusing wavelength.

12. An optical system (5000) including, being superimposed, an array optical component (500) according to any one of claims 1 to 11, and an array (580) of photodetectors, and wherein the individual cells (50) of the array optical component are distributed in at least one first distribution step (P1) and the photodetectors (581) of the array of photodetectors are distributed in at least one second distribution step (P2), with the first and second distribution steps being distinct from each other and not multiple of each other.

13. A replication optical component (790) for manufacturing an array optical component according to any of claims 1 to 11, which includes, being superimposed, a primary array (793') of holographic lenses, an array of opaque elements (792) and a substrate (791), with the array of opaque elements being disposed between the substrate and the primary array of holographic lenses, and wherein:

   - each holographic lens of said primary array (793') is formed by a plurality of elementary reflection holograms, each being configured to deflect light by a predetermined angle; and
   - each holographic lens of said primary array (793') is provided with an opening within which one of the opaque elements of the array of opaque elements (792) is located.

14. A method for manufacturing an array optical component according to any one of claims 1 to 11, **characterised in that** it includes the following steps of:

   - superimposing the replication optical component (790) according to claim 13 and a writing assembly (700A), wherein said writing assembly includes, being superimposed, a writing layer (710A) of photosensitive material, a support (720), and an array (730) of reflectors, with the support being disposed between the writing layer and the array of reflectors, and such that the writing layer (710A) is between the support (720) and the primary array (793') of holographic lenses of the replication optical component (790);
   - registering a secondary array of holographic lenses into the second writing layer (710A) by exposing the stack including the superimposed replication optical component (790) and writing assembly (700A); and
   - translating the replication optical component (790) relative to the writing assembly and re-registration a secondary array of holographic lenses in the second writing layer (710A), the translation and re-registration steps being implemented several times.

15. A replication optical component (690) for manufacturing an array optical component according to any one of claims 1 to 11, which includes, being superimposed, an array of microlenses (691) and an array of spatial filters (692), wherein each of said microlenses is a refractive lens and wherein the array of spatial filters includes opaque elements each being located facing a respective one of said microlenses.

FIG. 1A

FIG. 1B

**FIG. 2**

**FIG. 3A**

FIG. 3B

FIG. 3C

FIG. 4

FIG. 5A

FIG. 5B

FIG. 6

FIG. 7A

FIG. 7B

FIG. 7C

FIG. 7D

FIG. 7E

FIG. 8

**EP 3 983 837 B1**

**Documents brevets cités dans la description**

- US 5680231 A

**Littérature non-brevet citée dans la description**

- Holographie Recording Setup for Integrated See-Through Near-Eye Display Evaluation. **CHRISTOPHE MARTINEZ.** Imaging and Applied Optics. OSA Technical Digest, 2017